# FASCICULE DE BREVET EUROPEEN

(11) **EP 3 320 471 B1**
(45) Date de publication et mention de la délivrance du brevet: **20.10.2021**
(21) Numéro de dépôt: 16750929.8
(22) Date de dépôt: 06.07.2016
(51) Int. Cl.: G06F 21/12, G06F 21/79

(54) **SYSTEME ET PROCEDE D'AUTHENTIFICATION ET DE LICENCE IP DE MODULES HARDWARE**
SYSTEM UND VERFAHREN ZUR AUTHENTIFIZIERUNG UND LIZENZIERUNG VON HARDWARE IP MODULEN
SYSTEM AND METHOD FOR HARDWARE IP MODULES AUTHENTICATION AND LICENSING

(30) Priorité: 07.07.2015 FR 1556418
(43) Date de publication de la demande: 16.05.2018
(73) Titulaire: Université de Montpellier, 34090 Montpellier (FR); Centre National de la Recherche Scientifique CNRS, 75794 Paris Cedex 16 (FR)
(72) Inventeur: RAMPON, Jérôme, 30660 Gallargues Le Montueux (FR); PAUL, Gaël, 13100 Aix-en-Provence (FR); TORRES, Lionel, 34980 Combaillaux (FR)
(74) Mandataire: Cabinet Beaumont
(86) Numéro de dépôt international: PCT/FR2016/051718
(87) Numéro de publication internationale: WO 2017/006058

(56) Documents cités:
- US-A1- 2010 284 539
- US-A1- 2011 113 392
- JIAWEI HUANG ET AL: "IC activation and user authentication for security-sensitive systems", HARDWARE-ORIENTED SECURITY AND TRUST, 2008. HOST 2008. IEEE INTERNATIONAL WORKSHOP ON, IEEE, PISCATAWAY, NJ, USA, 9 juin 2008 (2008-06-09), pages 76-80, XP031283315, ISBN: 978-1-4244-2401-6

## Description

La présente demande de brevet revendique la priorité de la demande de brevet français FR15/56418.

### Domaine

La présente description concerne le domaine des circuits intégrés et en particulier un procédé et un système permettant l'authentification et la délivrance de licences pour des blocs de propriété intellectuelle (IP) dans un circuit intégré, et plus généralement l'authentification et l'attribution de licences pour tous circuits ou systèmes.

### Exposé de l'art antérieur

Les circuits intégrés comprennent en général un certain nombre de blocs de circuits, connus dans la technique sous le nom de blocs de propriété intellectuelle (IP). Les blocs IP correspondent à des conceptions de circuits matériels discrets qui réalisent des fonctions spécifiques et peuvent être réutilisés dans divers circuits intégrés différents. Les blocs IP se trouvant dans un circuit intégré (IC) donné sont généralement licenciés à un concepteur de circuits intégrés par les propriétaires des droits IP des blocs IP.

Les blocs IP sont en général fournis au concepteur de circuits intégrés sous forme de logiciel, par exemple dans un langage de description de matériel comme RTL (Register Transfer Level - niveau de transfert de registres), Verilog ou VHDL (Very High speed integrated circuit hardware Description Language - langage de description matérielle de circuits intégrés à très haute vitesse). Les ayant-droits IP accordent souvent une licence au concepteur de circuits intégrés pour utiliser leur bloc IP dans un nombre limité de circuits intégrés et/ou un nombre limité de projets, ou demandent le paiement de royalties pour chaque circuit/projet intégré qui intègre le bloc IP. Cependant, le piratage des circuits intégrés est devenu un problème de plus en plus important. En effet, à partir du moment où le bloc IP est livré au concepteur de circuits intégrés, il est très difficile pour les ayant-droits IP de contrôler la façon dont leur bloc IP est utilisé, et de limiter le nombre de circuits intégrés fabriqués en utilisant leur conception.

Certaines solutions ont été proposées pour permettre aux ayant-droits IP de verrouiller leurs conceptions de circuits. Cependant, les solutions existantes ont tendance à être complexes, coûteuses et/ou pas suffisamment sécurisées.

La publication de Jiawei Huang et al. intitulée "IC Activation and User Authentication for Security-Sensitive Systems", IEEE Workshop on Harware-oriented security and trust, 9 juin 2008, pages 76-80, décrit la protection de matériel.

US2011/113392 décrit la protection des cœurs de propriété intellectuelle.

US2010/0284539 décrit des procédés pour protéger contre le piratage des circuits intégrés.

### Résumé

Un objet de modes de réalisation de la présente description est de résoudre au moins partiellement un ou plusieurs besoins de l'art antérieur. Pour ce faire, l'invention est définie par les revendications indépendantes attachées. Les revendications dépendantes donnant des modes de réalisation.

Selon un aspect, on prévoit un dispositif comprenant un circuit de vérification de licence pour activer sélectivement un ou plusieurs circuits protégés d'un dispositif, le circuit de vérification de licence étant adapté à : communiquer à l'extérieur du dispositif un identificateur associé au dispositif ; déduire une clé de dispositif à partir de l'identificateur en appliquant une fonction de déduction de clé ; recevoir une première licence ; déchiffrer la première licence en utilisant la clé de dispositif afin d'extraire un premier code de vérification ; activer un premier circuit protégé en chargeant un code d'activation dans un registre d'activation associé au premier circuit protégé sur la base d'une vérification du premier code de vérification.

Selon un mode réalisation, l'identificateur associé au dispositif est fourni par une fonction physiquement non clonable, PUF.

Selon un mode réalisation, le circuit de vérification de licence est adapté à lire l'identificateur associé au dispositif sur une interface protégée par chiffrement.

Selon un mode réalisation, le circuit de vérification de licence comprend en outre : un serveur de licences comprenant un circuit de déduction de clé pour déduire la clé de dispositif et un circuit de déchiffrement pour déchiffrer la première licence ; un premier client de licence associé au premier circuit protégé et comprenant un premier circuit de commande pour activer le premier circuit protégé sur la base du premier code vérification ; et un deuxième client de licence associé à un deuxième circuit protégé et comprenant un deuxième circuit de commande adapté à activer le deuxième circuit protégé en chargeant un deuxième code d'activation dans un registre d'activation associé au deuxième circuit protégé.

Selon un mode réalisation, le serveur de licences est adapté à transmettre le premier code de vérification au premier client de licence et le deuxième code de vérification au deuxième client de licence.

Selon un mode réalisation, le premier code de vérification est chiffré par le serveur de licences sur la base d'une autre clé extraite de la première licence et transmise au premier circuit de commande du premier client de licence.

Selon un mode réalisation, le circuit de déchiffrement est en outre adapté à extraire l'autre clé de la première licence.

Selon un mode réalisation, le premier code de vérification comprend le code d'activation chiffré en utilisant une clé de vendeur IP, le premier client de licence étant en outre adapté à mémoriser la clé de vendeur IP dans une mémoire et à déchiffrer le premier code de vérification sur la base de la clé de vendeur IP pour extraire le code d'activation.

Selon un mode réalisation, le premier client de licence comprend : un circuit de génération d'interrogation comprenant un générateur de nombres aléatoires adapté à générer une valeur d'interrogation et à transmettre la valeur d'interrogation au serveur de licences; et un premier circuit de génération de réponse adapté à générer une première valeur de réponse sur la base d'au moins la valeur d'interrogation, le serveur de licences comprenant : un deuxième circuit de génération de réponse adapté à recevoir la valeur d'interrogation et à générer une deuxième valeur de réponse sur la base d'au moins la valeur d'interrogation, le premier client de licence comprenant en outre un circuit de vérification adapté à comparer une première valeur de réponse à la deuxième valeur de réponse.

Selon un mode réalisation, les premier et deuxième circuits de génération de réponse sont adaptés à générer les première et deuxième valeurs de réponse sur la base d'une fonction de hachage.

Selon un mode réalisation, le premier client de licence comprend une mémoire non volatile mémorisant une copie du code d'activation, le premier circuit de commande étant adapté à charger la copie du code d'activation dans le registre d'activation sur la base d'une vérification d'une ou plusieurs valeurs du premier code de vérification.

Selon un mode réalisation, le code de vérification comprend d'autres données indiquant un ou plusieurs des éléments suivants : une période de validité de la licence ; une limite géographique de la licence ; une limitation de la licence à un ou plusieurs types de matériel ; une limitation de température de la licence ; une limitation de tension de la licence ; une limitation de largeur de bande de la licence ; une limitation de vitesse de la licence ; une limitation d'accélération de la licence ; une limitation d'humidité de la licence ; une limitation de niveau lumineux de la licence ; une limitation de champ magnétique de la licence ; et une limitation de radioactivité de la licence.

Selon un mode réalisation, le premier code d'activation comprend une pluralité de bits, et le premier circuit protégé comprend une pluralité de portes logiques adaptées à activer sélectivement un chemin de signal du premier circuit protégé, chaque porte logique ayant une première entrée couplée à un nœud du premier circuit protégé et une deuxième entrée couplée de façon à recevoir l'un des bits mémorisés par le registre d'activation.

Selon un autre aspect, on prévoit un système de vérification de licence comprenant : un premier module IP (propriété industrielle) comprenant un premier circuit de vérification de licence dans le dispositif susmentionné ; un deuxième module IP comprenant un deuxième circuit de vérification de licence dans le dispositif susmentionné ; et un circulateur adapté à transmettre la première licence au premier module IP et une deuxième licence au deuxième module IP.

Selon un autre aspect, on prévoit un circuit de génération de licence comprenant : un circuit de déduction de clé adapté à déduire une clé de dispositif sur la base d'un identificateur de dispositif d'un dispositif en appliquant une fonction de déduction de clé ; un circuit de chiffrement adapté à générer une première licence pour un ou plusieurs circuits protégés du dispositif en chiffrant un ou plusieurs codes d'activation en utilisant la clé de dispositif.

Selon un mode de réalisation, le circuit de chiffrement est en outre adapté à chiffrer une autre clé à inclure dans la première licence.

Selon encore un autre aspect, on prévoit un procédé de vérification de licence pour activer sélectivement un ou plusieurs circuits protégés d'un dispositif, le procédé comprenant : communiquer à l'extérieur du dispositif un identificateur associé au dispositif ; déduire une clé de dispositif de l'identificateur en appliquant une fonction de déduction de clé; recevoir une première licence ; déchiffrer la première licence en utilisant la clé de dispositif afin d'extraire un premier code de vérification ; et activer un premier circuit protégé en chargeant le premier code d'activation dans un registre d'activation associé au premier circuit protégé sur la base d'une vérification du premier code de vérification.

### Brève description des dessins

Les avantages susmentionnés, et d'autres, apparaîtront clairement avec la description détaillée suivante de modes de réalisation, donnés à titre d'illustration et non de limitation en faisant référence aux dessins joints dans lesquels :
la figure 1A illustre schématiquement un système permettant de licencier des blocs IP selon un exemple de réalisation de la présente description ;
la figure 1B illustre un circuit de génération de licence de la figure 1A plus en détail selon un exemple de réalisation ;
la figure 2 illustre schématiquement un circuit intégré comprenant des composants pour délivrer une licence IP selon un exemple de réalisation de la présente description ;
les figures 3A et 3B illustrent schématiquement des circuits d'activation d'un bloc IP selon un exemple de réalisation de la présente description ;
la figure 4 illustre schématiquement un serveur de licences et un client de licence du circuit intégré de la figure 2 plus en détail selon un exemple de réalisation de la présente description ;
la figure 5 est un organigramme illustrant des opérations dans un procédé d'activation d'un bloc IP sur la base d'une licence en utilisant le serveur de licences et le client de licence de la figure 4 selon un exemple de réalisation de la présente description ;
la figure 6 illustre schématiquement un serveur de licences et un client de licence du circuit intégré de la figure 2 plus en détail selon un autre exemple de la présente description ;
la figure 7 est un organigramme illustrant des opérations dans un procédé d'activation d'un bloc IP sur la base d'une licence en utilisant le serveur de licences et le client de licence de la figure 6 selon un autre exemple de réalisation de la présente description ;
la figure 8 illustre schématiquement une interface sécurisée entre un client de licence et un serveur de licences de la figure 2 plus en détail selon un autre exemple de réalisation de la présente description ;
la figure 9 illustre schématiquement des composants pour délivrer une licence sur un circuit intégré selon encore un autre exemple de réalisation de la présente description ;
la figure 10 illustre schématiquement des composants pour délivrer une licence sur un circuit intégré selon encore un autre exemple de réalisation de la présente description ;
les figures 11A et 11B sont des vues au niveau carte illustrant schématiquement des composants pour délivrer une licence selon un mode de réalisation de la présente description ; et
la figure 12 illustre schématiquement un FPGA (réseau de portes programmable sur site) comprenant des composants pour délivrer une licence selon un exemple de réalisation de la présente description.

### Description détaillée

Bien que dans la description qui suit les modes de réalisation soient décrits dans une mise en œuvre matérielle, il apparaitra clairement à l'homme de l'art que les divers modes de réalisation pourraient être au moins partiellement mis en œuvre par des instructions de logiciel exécutées par un ou plusieurs processeurs.

Dans la description qui suit, les termes suivants se verront donner des définitions suivantes :
bloc IP - conception de circuit matériel discret qui réalise des fonctions spécifiques et peut être réutilisé dans divers circuits intégrés différents ;
circuit protégé - circuit, qui peut correspondre à un bloc IP, à un certain nombre de blocs IP ou à un système comprenant un ou plusieurs circuits intégrés, protégé par un mécanisme tel qu'il se trouve dans un état désactivé, à moins d'être activé par un code d'activation.

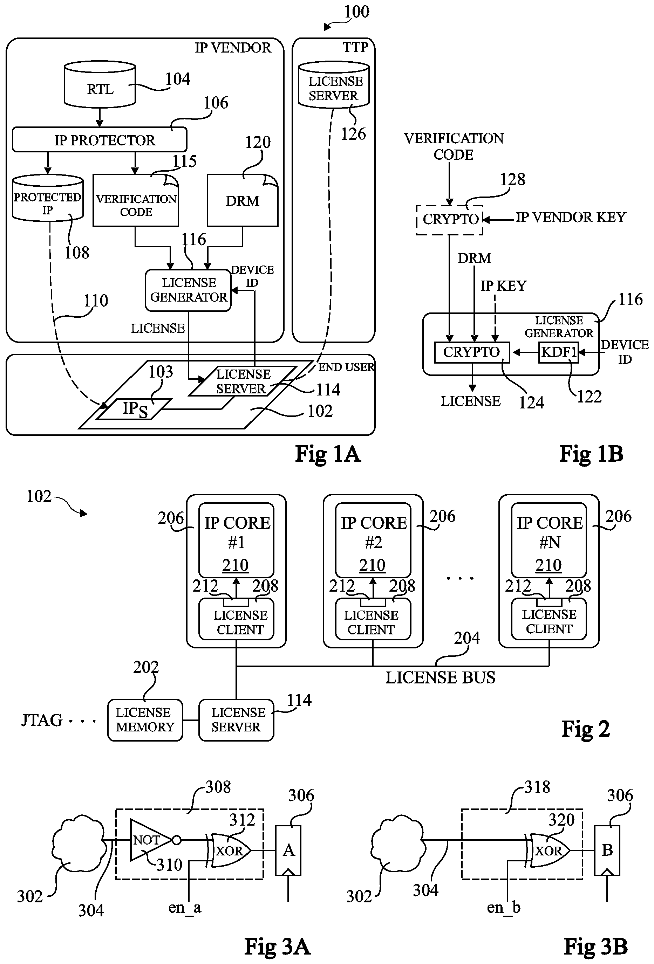

La figure 1A illustre schématiquement un système 100 permettant l'authentification et la délivrance de licences pour des circuits protégés selon un exemple de réalisation de la présente description.

Le système 100 comprend du matériel associé à trois partenaires principaux, un vendeur de propriété intellectuelle, IP, (IP VENDOR), une tierce partie de confiance (TTP), et un utilisateur final (END USER). La protection est basée sur une activation unitaire d'un ou plusieurs circuits protégés. Chaque circuit protégé est par exemple un circuit complexe développé pour réaliser une fonction précise, comme par exemple une interface pour gérer des protocoles standards, un circuit capable de réaliser des opérations avancées, comme un processeur, un circuit de codage ou de décodage, etc. Les circuits protégés sont par exemple mis en œuvre en utilisant un ou plusieurs circuits spécifiques d'application et/ou en utilisant un ou plusieurs réseaux de portes programmables sur site (FPGA).

Dans l'exemple de la figure 1A, on suppose qu'un circuit 102, acheté ou obtenu d'une autre façon par l'utilisateur final, comprend un ou plusieurs circuits protégés 103. Dans l'exemple de la figure 1A, le dispositif 102 est un circuit intégré, et les circuits protégés 103 sont des blocs IP du circuit intégré. Cependant, dans des variantes de réalisation, le dispositif pourrait correspondre à un dispositif électronique quelconque, et les circuits protégés pourrait comprendre chacun une carte ou un système comportant plus qu'un seul circuit intégré.

Le circuit intégré 102 fait par exemple partie d'un produit comme un téléphone mobile, une tablette informatique, un ordinateur portable, une console de jeu ou similaire, ou pourrait être une puce montée sur une carte à circuits intégrés, cela comprenant la famille de cartes connue sous le nom de cartes à puce, comprenant par exemple des cartes de paiement, des cartes SIM (module d'identité d'abonné) ou similaire.

Selon les modes de réalisation décrits ici, lesdits un ou plusieurs blocs IP 103 se trouvant sur le circuit intégré 102 sont par exemple dans un état désactivé lorsque l'utilisateur final reçoit le circuit intégré 102, et l'utilisateur final active les blocs IP désactivés en demandant une licence au vendeur IP ou au TTP. Toutefois, dans des variantes de réalisation, plutôt que d'être réalisée par l'utilisateur final, l'activation peut être réalisée par un autre partenaire dans la chaine de fourniture, comme le concepteur du circuit intégré, ou un vendeur d'un produit contenant le circuit intégré 102.

Le dispositif 102 comprend par exemple un identificateur de dispositif (DEVICE ID), qui comprend une chaine de bits qui identifie le dispositif 102 ou un groupe de dispositifs 102, et qui sert par exemple à l'authentification. La licence qui est fournie par le vendeur IP ou le TTP peut seulement être utilisée pour un dispositif ayant cet identificateur, et dans certains modes de réalisation, l'identificateur de dispositif est unique pour chaque dispositif, de sorte qu'une licence donnée peut seulement activer les circuits protégés d'un seul dispositif 102. Il serait toutefois aussi possible dans certains modes de réalisation de fournir une unique licence qui active un ensemble de dispositifs, qui ont par exemple le même identificateur de dispositif. L'identificateur de dispositif est par exemple généré par ou déduit d'une fonction physiquement non clonable, PUF.

L'activation d'un ou plusieurs des circuits protégés du dispositif 102 peut être permanente, ce qui signifie qu'une fois activés les circuits protégés du dispositif 102 vont rester activés. En plus ou à la place, un ou plusieurs des circuits protégés pourraient rester activés jusqu'à une opération de réinitialisation ultérieure du dispositif 102, et à ce stade une licence pourrait être de nouveau nécessaire pour réactiver ces circuits protégés. La licence peut rester mémorisée sur le dispositif, et ainsi pendant une séquence de mise sous tension, une opération de pré-initialisation (une opération avant que le signal de réinitialisation soit désactivé) implique de charger la licence, qui est déjà stockée dans une mémoire, dans la puce pour activer un ou plusieurs des circuits protégés.

En plus ou à la place, la licence peut initialement activer un ou plusieurs des circuits protégés pour une durée limitée ou pour un nombre de cycles d'horloge donné d'une horloge du dispositif. Par exemple, cela permet d'avoir un mode de démonstration pendant une période temporaire, dans lequel la totalité ou seulement certains des circuits protégés sont actifs, et à la fin de la période temporaire, une licence complète est par exemple nécessaire pour activer les circuits protégés.

Comme cela apparaîtra clairement avec la description suivante, le type particulier d'activation (permanente, jusqu'à une prochaine réinitialisation, ou temporaire) peut être différent pour chaque circuit protégé du dispositif. En outre, bien que le procédé décrit ici puisse être utilisé pour activer un seul bloc IP, il peut aussi être appliqué de façon plus générale à l'activation d'un circuit protégé quelconque qui peut correspondre à tous les blocs IP d'un dispositif donné, à un bloc IP dans un autre bloc IP et/ou à un bloc IP comprenant un autre bloc IP, à un système ou une carte à puce, à l'activation de tous les circuits dans une conception utilisant une technologie d'ASIC (circuit intégré spécifique d'application) donnée, à l'activation d'une famille donnée de FPGA, à l'activation de FPGA produits par un fabricant donné, etc. Il pourrait être aussi appliqué au niveau système. En outre, dans certains modes réalisation, la licence peut être utilisée pour activer ou désactiver seulement un sous-ensemble des fonctions d'un bloc IP.

Comme on va le décrire plus en détail ci-après, le procédé et le dispositif décrits ici permettent aussi par exemple à un circuit protégé, ou une sous-fonction, d'un circuit protégé d'être activé et désactivé plusieurs fois.

Un exemple du processus pour protéger et activer un bloc IP va maintenant être décrit plus en détail. Bien que cet exemple soit basé sur la protection d'un bloc IP, comme cela a été mentionné précédemment, dans des variantes de réalisation, il pourrait être appliqué à la protection d'autres types de circuits.

Au niveau du vendeur IP, une base de données (RTL) 104 mémorise par exemple un ou plusieurs blocs IP représentés dans un langage de description de matériel comme le code RTL ordinaire (niveau de transfert de registres).

Un bloc protecteur IP (IP PROTECTOR) 106 comprend par exemple du logiciel pour exécuter une fonction de protection IP, qui est utilisée pour modifier un ou plusieurs des blocs IP provenant de la base de données 104 pour rendre le circuit inactif. En particulier, le bloc IP est altéré de telle sorte qu'un code d'activation soit nécessaire pour débloquer ses fonctionnalités. Dans certains modes de réalisation, cette étape peut être réalisée entièrement automatiquement, bien que dans d'autres modes de réalisation elle puisse être réalisée au moins partiellement manuellement, par exemple par un concepteur du bloc IP. Comme on va le décrire plus en détail ci-après, la modification du bloc IP implique par exemple l'insertion, dans le fichier de description de matériel, d'une ou plusieurs portes logiques dans un ou plusieurs chemins de signaux du bloc IP. Ces portes logiques permettent par exemple la propagation du signal non altéré dans le chemin de signal seulement si un ou plusieurs bits d'activation corrects sont fournis à un ou plusieurs nœuds d'entrée des portes logiques insérées. Dans certains modes de réalisation, le code d'activation peut être unique pour une conception IP donnée. Dans d'autres modes de réalisation, le même code d'activation peut être utilisé pour plusieurs conceptions IP. En outre, dans certains modes de réalisation, il peut y avoir plus d'un seul code d'activation qui peut activer un bloc IP. Cela peut par exemple faciliter l'opération de génération de licences.

Un circuit destiné à gérer la licence IP, qui va être appelé ici client de licence (non illustré en figure 1A) est par exemple ajouté à chaque bloc IP à protéger. Comme cela va être décrit plus en détail ci-après, le client de licence comprend par exemple un registre pour mémoriser le code d'activation une fois qu'une licence valide a été fournie. Dans certains modes de réalisation, le client de licence est intégré dans chaque bloc IP, bien que comme cela est décrit plus en détail ci-après, chaque client de licence pourrait aussi être extérieur au bloc IP correspondant.

Dans certains modes de réalisation, les fichiers représentant les blocs IP modifiés sont par exemple aussi protégés par chiffrement.

Les codes d'activation, et optionnellement une partie ou la totalité de tous les blocs IP modifiés, sont par exemple mémorisés dans une base de données (PROTECTED IP) 108 du vendeur IP. Les blocs IP modifiés sont aussi fournis à un concepteur du circuit intégré 102 de sorte que, comme cela est représenté par une flèche 110 en figure 1A, un ou plusieurs blocs IP protégés 103 sont mis en œuvre sous forme de matériel dans le circuit intégré. En particulier, le concepteur du circuit intégré par exemple réunit divers blocs IP pour former un circuit intégré, et un plusieurs de ces blocs IP correspondent par exemple à des blocs IP protégés par un code d'activation tel que décrit ici.

La licence comprend par exemple un code de vérification. Le terme "code de vérification" est utilisé ici pour désigner un code qui est communiqué avec la licence et permet à un ou plusieurs blocs IP d'être activés. Ce code peut être le code d'activation pour un ou plusieurs blocs IP. Dans des variantes de réalisation le code d'activation est déjà mémorisé dans une mémoire protégée, par exemple une ROM, du bloc IP, et le code d'activation n'est pas inclus dans la licence. Dans ce cas, le code de vérification est un code secret communiqué avec la licence au bloc IP et qui permet au code d'activation d'être chargé à partir de la mémoire protégée dans le registre de code d'activation. Dans certains modes de réalisation, une licence temporaire peut être fournie au concepteur du circuit intégré dans un but de conception ou de test de circuits.

Le concepteur de circuit intégré intègre aussi par exemple un serveur de licences (LICENCE SERVER) 114 dans le circuit intégré 102. Ce circuit est par exemple fourni par le TPP, ou il peut être intégré dans un ou plusieurs des blocs IP protégés par le vendeur IP. Le serveur de licences 114 est par exemple couplé à un port du circuit intégré par l'intermédiaire duquel la licence peut être reçue. Le serveur de licences 114 est aussi par exemple couplé à chaque bloc IP protégé du circuit intégré, et en particulier au circuit client de licence de chaque bloc IP.

Le serveur de licences 114 comprend aussi par exemple un circuit pour générer l'identificateur de dispositif, par exemple sous forme d'une PUF. Comme cela va être décrit plus en détail ci-après, l'identificateur de dispositif est par exemple basé sur la génération d'une signature qui est unique au circuit intégré. Par conséquent, même si deux circuits intégrés sont fabriqués et/ou programmés pour avoir des fonctionnalités identiques, leurs signatures et donc leurs identificateurs de dispositif seront différents. La valeur PUF est par exemple générée par un CPU (unité centrale de traitement) du circuit intégré, et/ou est basée sur un ou plusieurs oscillateurs en anneau montés sur le circuit intégré. Des PUF sont par exemple décrites plus en détail dans les publications suivantes : la publication de David Naccache et al. intitulée "Unforgeable identification device, identification device reader and method of identification", août 1992 ; la publication de G. Simmons intitulée "Identification of data, devices, documents and individuals", IEEE International Carnahan Conférence on Security Technology, 1991, pages 197-218 ; la publication de Stefan Katzenbeisser et al. intitulée "PUFs: Myth, Fact or Busted? A Security Evaluation of Physically Unclonable Functions (PUFs) Cast in Silicon", (2012), Cryptographic Hardware and Embedded Systems - CHES 2012. 14th International Workshop, Leuven, Belgium, 9-12 Septembre, 2012. Proceeding, Lecture Notes in Computer Science 7428, Springer Berlin Heidelberg, pages 283-301, doi:10.1007/978-3-642-33027-8_17, ISBN 978-3-642-33026-1 ; la publication de Roel Maes et al. intitulée "Physically Unclonable Functions: A Study on the State of the Art and Future Research Directions" ; la publication de L. Bossuet et al. intitulée "A PUF based on a transient effect ring oscillator and insensitive to locking phenomenon", IEEE Transactions on Emerging Topics in Computing, Vol. 2, Issue 1, pages 30-36, 2014 ; la publication de P. Bayon et al. entitled "EM radiation analysis on true random number generators: Frequency and localization retrieval method", APEMC, 2013 ; la publication de Z. Cherif et al. intitulée "A easy-to-design PUF based on a single oscillator: the loop PUF," DSD, 2012 ; la publication de B. Gassend et al. intitulée "Silicon physical random functions", ACM CCS, pages 148-160, 2002 ; la publication de J. Guajardo et al. entitled "FPGA Intrinsic PUFs and Their Use for IP Protection," CHES, Springer, LNCS, vol. 4727, pages 63-80, 2007 ; la publication de D. Merli intitulée "Semi-invasive EM attack on FPGA RO PUFs and Countermeasures" ACM WESS, 2011 ; et la publication de G. E. Suh et al. intitulée "Physical unclonable functions for device authentication and secret key generation," DAC, 2007. Le contenu de ces onze publications est considéré comme inclus ici dans les limites autorisées par la loi.

Lorsque le circuit intégré est activé pour la première fois après sa fabrication et/ou sa programmation, la valeur de l'identificateur de dispositif est par exemple lue en lisant une valeur générée par un circuit PUF ou similaire. Dans certains cas, la valeur PUF peut changer dans le temps en raison du vieillissement du circuit intégré, et/ou pour d'autres raisons comme l'environnement (température, tension, etc.). Dans certains modes de réalisation, au vu d'un changement potentiel dans la PUF, au moins une partie de la valeur PUF générée est mémorisée dans une mémoire non volatile, et/ou un code de correction d'erreur est généré, ce qui permet à la valeur PUF d'être corrigée si certains bits de la valeur PUF s'écartent de leur valeur originale. L'identificateur de dispositif est aussi mis à disposition au niveau d'un port d'accès du circuit intégré 102, ou communiqué d'une autre façon à l'extérieur du circuit intégré 102, et est utilisé pour demander une licence pour activer les blocs IP protégés.

Comme alternative à une PUF, on pourrait utiliser une autre forme d'identificateur de dispositif, comme un identificateur affecté au dispositif par le fabricant du dispositif.

La génération de licence est par exemple réalisée par le vendeur IP, ou par le partenaire de confiance, en réponse à une requête provenant de l'utilisateur final ou d'un autre partenaire souhaitant activer un circuit intégré 102. La requête de licence inclut l'identificateur de dispositif, qui est lu dans le circuit intégré 102.

Selon un exemple, la requête d'activation peut comprendre une requête pour l'activation de multiples IP. Par exemple, une application peut être fournie, par exemple sur un ordinateur externe couplé au circuit intégré, qui interagit avec le circuit intégré 102 pour obtenir l'identificateur de dispositif. L'identificateur de dispositif est ensuite transmis à un serveur de licences (LICENCE SERVER) 126 du partenaire de confiance. Le serveur de licences 126 par exemple distribue à son tour des requêtes de licences à chacun des vendeurs IP des modules IP du circuit intégré. Une application de gestion des relations clients située au niveau du vendeur IP consulte par exemple une base de données de clients et vérifie que la licence peut être fournie. Par exemple, elle vérifie que le circuit intégré ayant l'identificateur de dispositif correspondant n'est pas un circuit volé, et que le paiement pour la licence a été reçu. Le vendeur IP génère ensuite par exemple une licence sur la base de l'identificateur de dispositif, et transmet la licence au serveur de licences 126 du TTP, où la licence est par exemple mémorisée et transmise au circuit intégré 102 pour utilisation dans le processus d'activation.

Bien sûr, de nombreuses variantes pourraient être appliquées à cette procédure. Par exemple, une base de données de clients peut être mémorisée au niveau du TTP, accompagnée d'un circuit de génération de licences pour générer une licence pour activer un ou plusieurs blocs IP d'un circuit intégré sur la base de l'identificateur de dispositif.

Dans certains modes de réalisation, une licence séparée est générée pour chaque bloc IP à activer. En variante, une licence peut être générée pour activer une pluralité de blocs IP. Par exemple, la licence comprend le code de vérification de chaque bloc IP à activer.

Dans le cas où la licence est générée par le vendeur IP, le code ou les codes de vérification (VERIFICATION CODE) 115 nécessaires pour déverrouiller le ou les blocs IP protégés du circuit intégré 102 sont par exemple fournis à un générateur de licence (LICENSE GENERATOR) 116 au niveau du vendeur IP. Le générateur de licence 116 est utilisé pour générer une licence (LICENSE) qui est par exemple transmise au serveur de licences 114 du circuit intégré 102. Le générateur de licence 116 reçoit par exemple l'identificateur de dispositif (DEVICE ID) à partir du circuit intégré 102, et génère la licence sur la base de cet identificateur et du ou des codes de vérification. Dans certains modes de réalisation, la licence intègre aussi des données DRM (gestion de droits de conception) 120. Les données DRM indiquent par exemple une limite dans la durée d'activation d'un bloc IP, par exemple dans le cas où la licence est une licence temporaire. Elles peuvent aussi indiquer une limitation de la licence à un ou plusieurs types de matériel, comme une technologie d'ASIC, une famille de FPGA, ou des fonctionnalités spécifiques d'un bloc IP qui doivent être déverrouillées. Le type de matériel du circuit peut par exemple être déterminé par un capteur spécifique, et être comparé auxdits un ou plusieurs types de matériel autorisés afin de limiter l'utilisation du bloc IP à ces types de matériel. En outre, en plus ou à la place, les données DRM de la licence peuvent définir des données de limitation indiquant des limites de la licence sur la base d'autres variables qui peuvent être mesurées par des capteurs du dispositif. Par exemple, les données DRM peuvent définir : une limite de température de la licence, par exemple sur la base d'un capteur de température ambiante ; une limite de tension de la licence, par exemple sur la base du niveau d'une tension d'alimentation dans le circuit ; une limite de bande passante de la licence ; une limite de vitesse de la licence, par exemple sur la base de la lecture d'un GPS (système de positionnement global) du dispositif ; une limite d'accélération de la licence, sur la base par exemple de la lecture d'un accéléromètre du dispositif ; une limite d'humidité de la licence, par exemple sur la base d'un capteur d'humidité ambiante du dispositif ; une limite de lumière de la licence, par exemple sur la base d'un capteur de lumière ambiante du dispositif ; une limite de champ magnétique de la licence, par exemple sur la base d'une mesure d'un capteur à effet Hall du dispositif ; une limite de radioactivité de la licence, par exemple sur la base d'une mesure d'un compteur Geiger du dispositif ; et/ou un autre type de limite sur la base d'une mesure faite par un capteur approprié.

Dans certains modes de réalisation, les données DRM modifient le code de vérification. Par exemple, dans certains modes de réalisation, le code de vérification comprend le code d'activation, et certains bits du code d'activation ne sont pas fournis ou sont incorrects, de sorte que seulement une partie du bloc IP est activée par le code d'activation. Dans d'autres modes de réalisation, on peut utiliser d'autres techniques qui ne sont pas basées sur une activation/désactivation bit par bit du bloc IP.

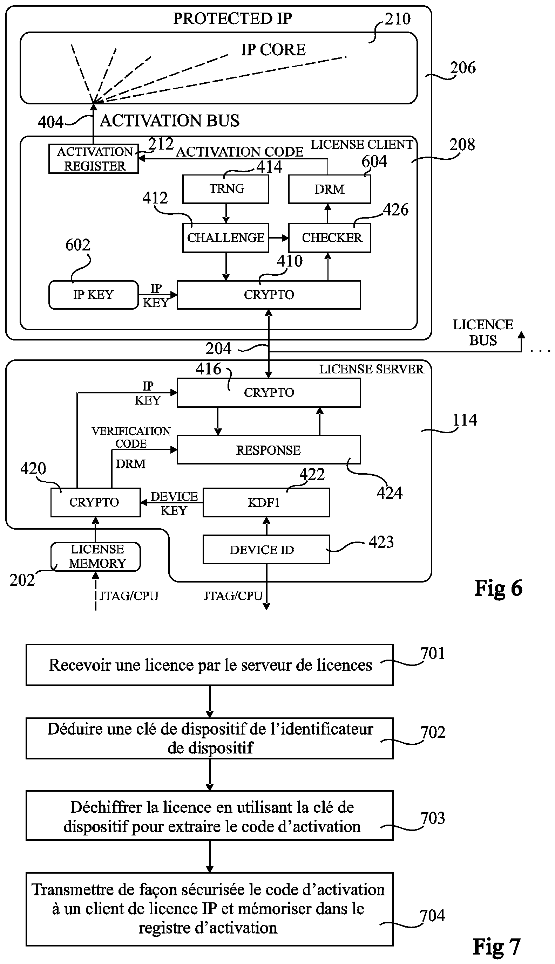

La figure 1B illustre le générateur de licence 116 plus en détail selon un exemple de réalisation. Le générateur de licence 116 comprend par exemple un bloc de fonction de déduction de clé (KDF1) 122, qui génère une clé de dispositif DK sur la base de l'identificateur de dispositif fourni par le circuit intégré. Le générateur de licence 116 comprend aussi par exemple un circuit cryptographique 124, qui applique la clé de dispositif au code ou aux codes de vérification des blocs IP à activer, afin de générer la licence. Par exemple, le circuit cryptographique 124 code le ou les codes de vérification sur la base de la clé de dispositif en appliquant un algorithme de chiffrement comme l'algorithme DES (norme de chiffrement de données), AES (norme de chiffrement avancé) ou similaire. Les données DRM peuvent aussi être chiffrées et faire partie de la licence. En outre, dans un mode de réalisation décrit ci-après en relation avec la figure 6, une clé IP est aussi fournie au générateur de licence 116 et chiffrée par le circuit 124 pour être incluse dans la licence.

Dans certains modes de réalisation, plutôt que la licence soit générée par le vendeur IP, la licence est générée par le TTP, par exemple sous la forme d'une solution SaaS (logiciel sous forme de service). Ainsi, le TTP comprend le générateur de licence 116, qui par exemple reçoit l'identificateur de dispositif, et le ou les codes de vérification provenant du vendeur IP, et dans certains cas la clé IP. Comme cela est représenté par un bloc 128 (CRYPTO), dans certains modes de réalisation, le ou les codes de vérification peuvent être chiffrés, par le vendeur IP, en utilisant une clé de vendeur IP (IP VENDEUR KEY), et la clé de vendeur IP est aussi par exemple mémorisée par le vendeur IP dans le bloc IP, ce qui permet de déchiffrer le ou les codes de vérification. De cette manière, même la TTP ne peut pas accéder aux codes de vérification.

L'opération de génération de licence permet un comptage, par le TTP ou le vendeur IP, du nombre de circuits intégrés auxquels des licences ont été accordées. Dans le cas où chaque licence est valide pour un seul circuit intégré, le nombre de licences générées va être égal au nombre de circuits intégrés comprenant les blocs IP protégés, et ainsi un compte peut être fait dans le but de calculer les royalties dues au vendeur IP, ou de détecter une brèche dans les conditions d'un accord de licence.

La licence générée est ensuite fournie au circuit intégré 102, par exemple au serveur de licences 114, qui décrypte la licence sur la base de l'identificateur de dispositif du circuit intégré 102, et extrait le code de vérification. Un algorithme de chiffrement/déchiffrement symétrique est par exemple utilisé pour chiffrer le code de vérification par le générateur de licence 116 en utilisant la clé de dispositif, puis pour déchiffrer la licence au niveau du circuit intégré 102, de sorte que si les clés sont identiques, le code de vérification va être récupéré avec succès.

La figure 2 illustre schématiquement des composants de licence du circuit intégré 102 de la figure 1A plus en détail selon un exemple de réalisation, dans le cas où la communication entre le serveur de licences 114 et les IP 103 est basée sur une configuration client-serveur. Cependant, dans des variantes de réalisation, d'autres types de configurations de communication seraient possibles, comme un réseau sur puce (NoC), ou un protocole de multidiffusion ou de diffusion. La communication entre le serveur de licences 114 et les IP 103 est par exemple sécurisée en utilisant un chiffrement.

Comme cela est illustrée en figure 2, une interface JTAG (Joined Test Action Group) est par exemple utilisée pour transmettre la licence reçue du générateur de licences 116 à une mémoire de licence (LICENSE MEMORY) 202 du circuit intégré 102. Bien sûr, il serait possible d'utiliser d'autres interfaces standards, comme l'interface USB (bus série universelle).

La mémoire 202 est par exemple une RAM (mémoire à accès aléatoire). La mémoire de licence 202 est couplée de façon interne au serveur de licences 114. Le serveur de licences 114 communique par exemple, par l'intermédiaire d'un bus de licence (LICENSE BUS) 204, avec les blocs IP protégés 206. Dans l'exemple de la figure 2, le bus de licence 204 est couplé à un circuit client de licence (LICENSE CLIENT) 208 associé à chaque bloc IP 206, qui est lui-même couplé au reste du bloc IP 206, noté noyau IP (IP CORE) 210 en figure 2. Dans l'exemple de la figure 2, il y a N noyaux IP 1 à N, où N est par exemple un entier supérieur ou égal à 2.

Le client de licence 208 de chaque bloc IP 206 vérifie par exemple la licence, et sur la base de cette vérification, fournit le code activation au noyau IP correspondant afin d'activer ses fonctionnalités. Par exemple, chaque client de licence 208 comprend un registre de code d'activation 212 dans lequel le code d'activation est chargé si la licence est trouvée valide. Le registre 212 de chaque client de licence est couplé au noyau IP 210 correspondant afin d'activer ses fonctionnalités.

Les figures 3A et 3B illustrent des exemples de circuits utilisés pour rendre l'activation des blocs IP dépendante d'un ou plusieurs bits d'un code d'activation, en insérant des portes logiques dans un chemin de signal du bloc IP.

Dans l'exemple de la figure 3A, une portion de circuit du bloc IP représenté par le nuage 302 fournit un signal de sortie sur une ligne 304, qui est couplé à l'entrée d'un dispositif logique synchrone (A) 306. Pour rendre l'activation de la ligne de sortie 304 dépendante d'un bit d'activation, un circuit d'activation 308 est inséré entre la ligne de sortie 304 et l'entrée du dispositif synchrone 306. Le circuit 308 comprend par exemple un inverseur (NOT) 310 ayant son entrée couplée à la ligne 304, et sa sortie couplée à une entrée d'une porte OU EXCLUSIF (XOR) 312. L'autre entrée de la porte OU EXCLUSIF 312 reçoit un bit d'activation en_a, qui devrait être haut afin de permettre au signal de données présent sur la ligne 304 de se propager vers le dispositif synchrone 306.

La figure 3B illustre un autre exemple d'un circuit d'activation 318 inséré dans le même chemin de signal que dans l'exemple de la figure 3A. Cette fois, le circuit 318 comprend une porte OU EXCLUSIF (XOR) 320 ayant une entrée couplée à la ligne 304, et son autre entrée couplée de façon à recevoir un bit d'activation en_b. Dans cet exemple, le bit d'activation devrait être bas afin de permettre au signal sur la ligne 304 d'être propagé vers l'entrée du dispositif synchrone (B) 306.

Ainsi les figures 3A et 3B illustrent des exemples de circuits qui peuvent être insérés afin d'activer des portions de circuits des blocs IP sur la base de bits d'activation hauts et bas respectivement. Des circuits similaires peuvent être insérés en divers points dans le bloc IP, de sorte que le bloc IP ne va pas fonctionner sans le code d'activation correct. Bien sûr, les figures 3A et 3B ne sont que quelques exemples des portes logiques qui peuvent être utilisées pour protéger le bloc IP, et de nombreuses fonctions logiques différentes pourraient être mises en œuvre sur la base des mêmes principes. Dans certains modes de réalisation, l'insertion est réalisée de façon aléatoire, de sorte que le code d'activation est une valeur aléatoire et ne dépend pas de la fonction du circuit sous-jacent. Dans des variantes de réalisation, l'insertion pourrait être non aléatoire. En outre, bien que dans les exemples des figures 3A et 3B le circuit 308 soit utilisé dans le cas de l'activation par un bit à "1" du code d'activation, et le circuit 318 soit utilisé dans le cas de l'activation par un bit à "0" du code d'activation, dans des variantes de réalisation il y a de multiples circuits différents qui sont utilisés dans le cas d'une activation par bit à "1" et à "0", et la sélection entre ces circuits est aléatoire.

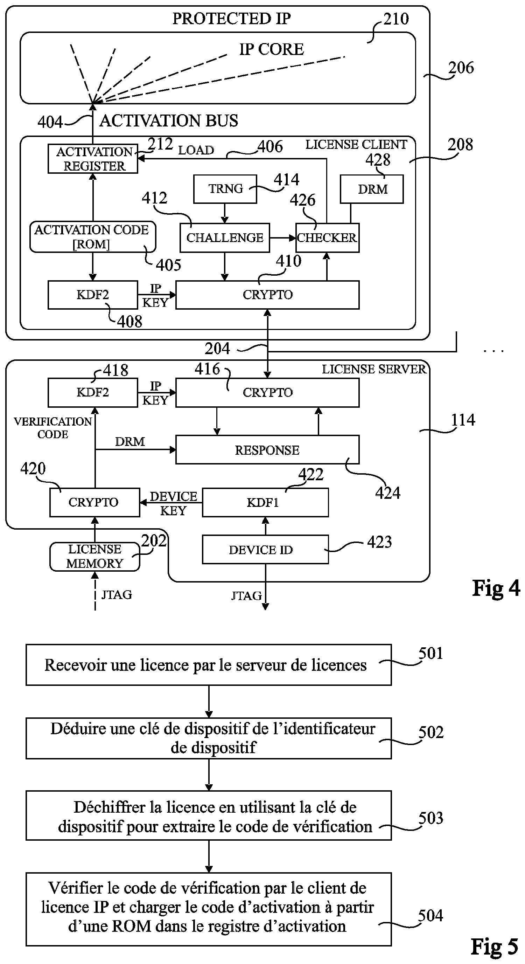

La figure 4 illustre schématiquement le client de licence 208 et le serveur de licences 114 de la figure 2 plus en détail selon un exemple de réalisation.

Le client de licence 208 comprend le registre d'activation (ACTIVATION REGISTER) 212, qui propage un code d'activation vers des circuits d'activation (non illustrés en figure 4) du noyau IP 210, par l'intermédiaire d'un bus d'activation (ACTIVATION BUS) 404.

Dans l'exemple de la figure 4, le code d'activation (ACTIVATION CODE [ROM]) est mémorisé dans une mémoire 405 du client de licence 208, qui est par exemple une ROM (mémoire à lecture seulement), et est seulement chargé dans le registre d'activation 212 lorsque le signal de chargement LOAD est activé sur une ligne 406. Le signal de chargement est par exemple activé seulement suite à une vérification réussie du code de vérification reçu par l'intermédiaire du serveur de licences 114.

Dans un mode de réalisation, le code de vérification extrait de la licence par le serveur de licences 114 comprend le code d'activation. Dans ce cas, pour vérifier la licence par le client de licence 208, le code d'activation mémorisé dans la mémoire 405 est par exemple utilisé pour déduire une clé pour chiffrer un signal d'interrogation transmis au serveur de licences 114, et pour déchiffrer la réponse. En particulier, le code d'activation est transmis à un bloc de fonction de déduction de clé (KDF2) 408, qui génère une clé IP (IP KEY) sur la base du code d'activation. Un bloc cryptographique (CRYPTO) 410, qui applique par exemple un algorithme AES de chiffrement/déchiffrement, chiffre une valeur d'interrogation (CHALLENGE) 412, qui est par exemple générée par un générateur de nombres aléatoires (RNG) 414. Dans certains modes de réalisation, le RNG 414 est un générateur de nombres aléatoires vrais, ou un générateur de nombres pseudo-aléatoires (PRNG). La valeur d'interrogation chiffrée est transmise au serveur de licences 114 par l'intermédiaire du bus de licence 204.

Au niveau du serveur de licences 114, un circuit cryptographique (CRYPTO) 416 applique par exemple le même algorithme que le bloc 410 pour déchiffrer l'interrogation sur la base d'une clé IP déduite du code d'activation reçu avec la licence. En particulier, le bloc cryptographique 416 reçoit la clé IP (IP KEY) d'un bloc de fonction de déduction (KDF2) 418, qui à son tour reçoit le code d'activation extrait de la licence mémorisée dans la mémoire de licence 202. Le code d'activation est extrait par un circuit cryptographique (CRYPTO) 420, qui déchiffre la licence sur la base d'une clé de dispositif (DEVICE KEY) fournie par un bloc 422 de fonction de déduction de clé (KDF1). Le bloc KDF1 422 reçoit l'identificateur de dispositif à partir d'un circuit (DEVICE ID) 423, qui par exemple génère et fournit l'identificateur de dispositif sur demande provenant du bloc KDF 422, ou qui est une mémoire mémorisant l'identificateur de dispositif. La fonction de déduction de clé appliquée par le bloc 422 est par exemple la même que celle appliquée par le bloc 122 de la figure 1B, de sorte que la clé de dispositif est la même. En variante, comme cela a été mentionné précédemment, la fonction de déduction de clé appliquée par le bloc 422 peut générer des clés publiques et privées, la clé privée étant utilisée comme clé de dispositif pour déchiffrer la licence.

La fonction de déduction de clé KDF1 appliquée par les blocs 122 et 422, et la fonction de déduction de clé KDF2 appliquée par les blocs 408 et 418 sont par exemple des fonctions cryptographiques secrètes pour déduire la clé de dispositif et la clé IP de façon sécurisée. Dans certains modes de réalisation, les fonctions de déductions de clé pourraient être basées sur une autre clé mémorisée par les blocs 122, 422 et/ou 408, 418.

Un circuit de réponse (RESPONSE) 424 reçoit par exemple la valeur d'interrogation déchiffrée par le bloc 416, et génère une réponse. Par exemple, la réponse est une opération simple comme l'addition de la valeur un à l'interrogation, ou la réalisation d'une permutation de l'interrogation, ou une opération plus complexe. En plus, la réponse peut inclure des données DRM extraites de la licence par le bloc cryptographique 420.

La réponse est chiffrée par le bloc cryptographique 416, sur la base de nouveau de la clé IP, et renvoyée au bloc cryptographique 410 sur le bus de licence 204 pour déchiffrement par le bloc cryptographique 410. Dans le client de licence 208, la réponse est fournie à un circuit vérificateur (CHECKER) 426 du client de licence 208, qui vérifie que la réponse correspond à une déduction acceptée de l'interrogation. Si la réponse est trouvée valide, le signal de chargement est activé sur la ligne 406 afin que le registre d'activation 212 charge le code d'activation à partir de la ROM 404.

En outre, dans le cas où la réponse comprend des donnés DRM extraites de la licence, le vérificateur mémorise par exemple les données DRM dans une mémoire 428 et/ou met à disposition les données DRM pour le noyau IP 210. Les données DRM peuvent limiter l'activation à un certain type de circuits, comme les ASIC, les FPGA etc. En plus ou à la place, les données DRM par exemple règlent une limite de temps et/ou une limite géographique pour l'activation du bloc IP. Par exemple, si une limite géographique est appliquée, les données DRM définissent par exemple une zone dans laquelle le bloc IP peut être activé, et des données de position, fournies par un dispositif de localisation, comme un dispositif GPS (système de positionnement global), dans le dispositif 102, sont utilisées pour vérifier si le dispositif reste dans la zone autorisée. Dans le cas où les données DRM indiquent que la licence a une période de validité limitée, le vérificateur 426 active par exemple un minuteur, mis en œuvre par exemple en utilisant un compteur, afin de vérifier à quel moment la période de validité limitée de la licence expire. Lorsque cette période expire, le vérificateur 426 désactive par exemple le signal de charge de sorte que le registre d'activation 212 est réinitialisé, et le bloc IP est désactivé de nouveau. En variante, les informations DRM peuvent être incorporées directement dans la partie du code de vérification fournie dans la réponse, ce qui fait que seulement une partie du code d'activation est chargée dans le registre d'activation, et qu'ainsi on ne déverrouille qu'une partie du circuit IP.

Dans un autre mode de réalisation, le code de vérification extrait de la licence ne comprend pas le code d'activation. Dans ce cas, le client de licence 208 comprend par exemple une autre mémoire (non illustrée), qui est par exemple une ROM, et mémorise le code de vérification. Ce code est utilisé pour déterminer la clé IP fournie au circuit cryptographique 410. Le procédé décrit précédemment est ensuite utilisé pour vérifier le code de vérification, et si la vérification est réussie, le code d'activation mémorisé dans la mémoire 405 est chargé dans le registre d'activation 212.

Plutôt que d'utiliser le circuit de fonction de déduction de clé 418 pour déterminer la clé IP, elle peut être transmise avec la licence. En effet, comme cela est décrit en relation avec la figure 1B, le générateur de licences 116 peut intégrer la clé IP dans la licence.

La figure 5 est un organigramme illustrant des opérations dans un procédé, basé sur le circuit de la figure 4, pour activer un bloc IP en utilisant une licence.

Dans une opération 501, la licence est reçue par le serveur de licences 114.

Dans des opérations suivantes 502 à 504, la licence est par exemple vérifiée. Ces opérations sont par exemple réalisées au moment de la mise en fonctionnement du circuit, par exemple à chaque fois que le circuit est mis sous tension. La licence est disponible dans la mémoire de licence 202. Par exemple, la licence est demandée à une source externe et chargée dans la mémoire de licence 202 à chaque mise sous tension du dispositif. En variante, la mémoire de licence 202 peut être une mémoire non volatile mémorisant la licence même lorsque que le dispositif est éteint.

Dans l'opération 502, la clé de dispositif est déduite de l'identificateur de dispositif, qui est par exemple une valeur PUF.

Dans l'opération 503, la licence est déchiffrée en utilisant la clé de dispositif pour extraire le code de vérification.

Dans l'opération 504, le code de vérification est vérifié par le client de licence IP 208, par exemple en utilisant un protocole interrogation/réponse comme décrit précédemment, et le code d'activation est chargé à partir de la ROM 404 dans le registre d'activation 212 afin d'activer le bloc IP.

Un avantage de la mise en œuvre de la figure 4 est que le code d'activation n'est pas transmis sur le bus de licence 204, ce qui signifie que des messages interceptés de façon frauduleuse sur ce bus ne peuvent pas être utilisés pour obtenir le code d'activation.

La figure 6 illustre schématiquement le client de licence 208 et le serveur de licences 114 de la figure 2 plus en détail selon une variante de réalisation par rapport au mode de réalisation de la figure 4. Les éléments de la figure 6 qui sont identiques ou similaires à ceux de la figure 4 portent les mêmes références numériques et ne seront pas décrits de nouveau en détail.

Dans le mode de réalisation de la figure 6, le code d'activation n'est pas mémorisé dans une mémoire par le client de licence 208. Au lieu de cela, le client de licence mémorise une clé IP (IP KEY) dans une mémoire 602, qui est par exemple une ROM. C'est par exemple la même clé IP que celle fournie au bloc cryptographique 124 du générateur de licence 116 de la figure 1B. Comme dans le mode de réalisation de la figure 4, la clé IP est utilisée par le circuit cryptographique 410 pour chiffrer une valeur d'interrogation fournie par un bloc 412.

Dans le serveur de licences 114, la clé IP est extraite de la licence reçue par le bloc cryptographique 420, et utilisée par le bloc cryptographique 416 pour déchiffrer la valeur d'interrogation. Dans le mode de réalisation de la figure 6, un message de réponse transmis au client de licence 208 comprend par exemple la réponse à l'interrogation, et aussi le code de vérification, qui est extrait par le bloc cryptographique 420 comme dans le mode de réalisation de la figure 4. Le message de réponse peut aussi comprendre les données DRM. Le message de réponse est chiffré par le bloc cryptographique 416 sur la base de la clé IP.

Dans le client de licence 208, le bloc cryptographique 410 déchiffre ensuite le message de réponse, et fournit la réponse à l'interrogation, le code de vérification, et les données DRM s'il y en a, au circuit vérificateur 426. Le circuit vérificateur 426 vérifie que la valeur d'interrogation a été modifiée correctement par le circuit de réponse 424, et passe les données DRM et le code de vérification à un circuit DRM 604, qui par exemple fonctionne de façon similaire au circuit DRM 428 de la figure 4.

Le code de vérification comprend par exemple le code d'activation, auquel cas le code d'activation est ensuite chargé directement dans le registre d'activation 212. En variante, le code de vérification correspond au code d'activation chiffré par une clé de vendeur IP. Dans ce cas, la clé de vendeur IP est par exemple mémorisée dans une autre mémoire (non illustrée) du client de licence 208, et est utilisée par le circuit cryptographique 410 pour déchiffrer le code de vérification et extraire le code d'activation, qui peut alors être chargé dans le registre d'activation 212.

La figure 7 est un organigramme illustrant des opérations dans un procédé, basé sur le circuit de la figure 6, pour activer un bloc IP en utilisant une licence.

Dans une opération 701, la licence est reçue par le serveur de licences 114.

Dans des opérations suivantes 702 à 704, la licence est par exemple vérifiée. Ces opérations sont par exemple réalisées au moment de la mise en fonctionnement du circuit, par exemple à chaque fois que le dispositif est mis sous tension. La licence est disponible dans la mémoire de licence 202. Par exemple, la licence est demandée à une source externe et chargée dans la mémoire de licence 202 à chaque mise sous tension du dispositif. En variante, la mémoire de licence 202 peut être une mémoire non volatile mémorisant la licence même lorsque le dispositif est éteint.

Dans l'opération 702, la clé de dispositif est déduite de l'identificateur de dispositif, qui est par exemple une valeur PUF.

Dans l'opération 703, la licence est déchiffrée en utilisant la clé de dispositif pour extraire le code d'activation.

Dans l'opération 704, le code d'activation est reçu par le client de licence 206, et si la clé IP reçue avec la licence est correcte, le code d'activation est transmis au registre d'activation 112 afin d'activer le bloc IP.

Un avantage de la mise en œuvre de la figure 6 est que le code d'activation n'est pas mémorisé dans une ROM, et ainsi même si la clé IP est obtenue de façon frauduleuse, le bloc IP protégé ne peut pas être activé.

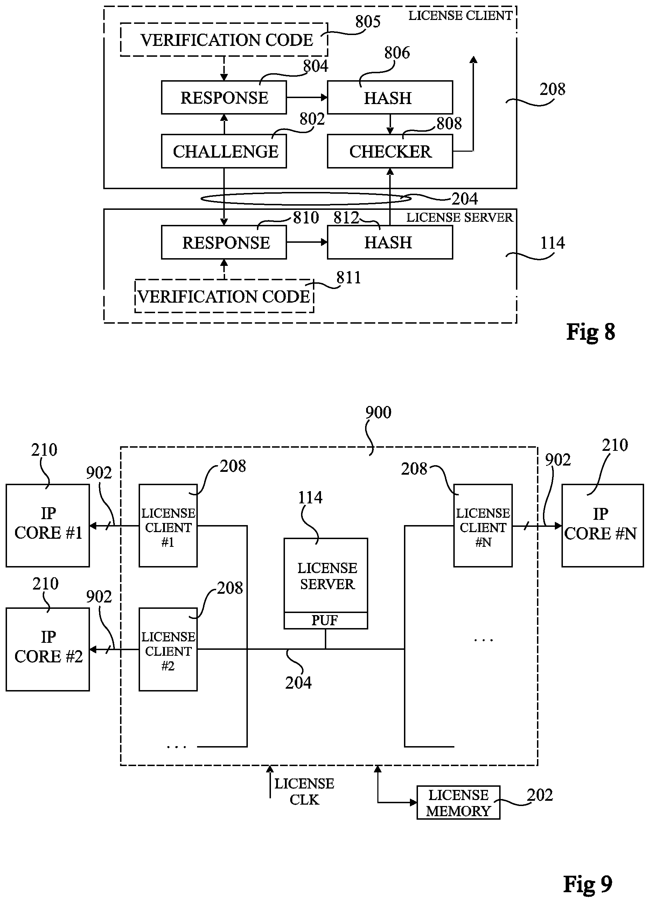

Alors que dans les modes de réalisation des figures 4 et 6 on utilise des circuits cryptographiques 410, 416 pour ajouter de la sécurité au bus de licence 204, dans des variantes de réalisation, tout système qui assure la sécurité des données transférées entre le serveur de licences 114 et le circuit de licence 208 pourrait être utilisé. Par exemple, on pourrait utiliser une fonction de hachage ou de signature, comme on va le décrire maintenant en faisant référence à la figure 8.

La figure 8 illustre schématiquement des portions du serveur de licences 114 et du client de licence 208 pour communiquer sur le bus de licence 204 selon un exemple de réalisation, et par exemple qui remplacent le circuit KDF 408, les blocs cryptographiques 410, 416, et les circuits d'interrogation, de réponse et de vérification 412, 424 et 426 des figures 4 et 6. Cet exemple suppose que le code de vérification est mémorisé par le client de licence 208, et n'est par conséquent pas transmis sur le bus de licence 204.

Un circuit d'interrogation (CHALLENGE) 802 génère par exemple une valeur d'interrogation, qui est par exemple une valeur numérique basée sur une valeur aléatoire générée par un générateur de nombres aléatoires vrais (non illustré en figure 8). La valeur d'interrogation est fournie à un circuit de réponse (RESPONSE) 804, qui génère une réponse à l'interrogation, sur la base du code de vérification (VERIFICATION CODE) mémorisé dans une mémoire 805, qui est par exemple une ROM. La réponse est par exemple générée en appliquant une fonction à la valeur d'interrogation et au code de vérification, comme une addition ou une multiplication. La valeur de réponse est ensuite fournie à un circuit de calcul de hachage (HASH) 806, qui génère une valeur de hachage sur la base de la réponse. Dans certains modes de réalisation, la signature générée par la fonction de hachage est une signature MAC (code d'authentification de message). La sortie du circuit de hachage 806 est fournie à un circuit vérificateur (CHECKER) 808.

La valeur d'interrogation générée par le circuit d'interrogation 802 est aussi transmise sur le bus de licence 204 au serveur de licences 114, par exemple à un circuit de réponse (RESPONSE) 810 du serveur de licences 114. Le circuit de réponse 810 génère la réponse en utilisant le même algorithme que le circuit 802, mais sur la base du code de vérification 811 extrait à partir de la licence. La réponse est ensuite fournie à un circuit de hachage (HASH) 812, qui applique le même algorithme que le circuit de hachage 806, et transmet le résultat au circuit vérificateur 808 pour comparaison avec la valeur générée par le circuit de hachage 806. Si le code de vérification 811 reçu avec la licence concorde avec le code de vérification mémorisé dans la mémoire 805, la vérification est réussie, et le code d'activation est chargé dans le registre d'activation 212 (non illustré en figure 8).

Le mode de réalisation de la figure 8 est simplement un exemple. Dans des variantes de réalisation, le code de vérification n'est pas utilisé pour modifier la réponse 810, et au lieu de cela le code de vérification est communiqué au client de licence 208 dans une étape séparée. Dans un tel cas, le client de licence 208 par exemple ne mémorise pas le code de vérification.

Dans les modes de réalisation des figures 4, 6 et 8, l'identificateur de dispositif est par exemple lu et utilisé pour vérifier une licence de façon sécurisée, pour empêcher un pirate de forcer la même valeur que l'identificateur de dispositif à utiliser. Par exemple, le serveur de licences 114 est adapté à lire l'identificateur (DEVICE ID) associé au circuit intégré sur une interface protégée par chiffrement. Par exemple, la lecture de l'identificateur de dispositif est basée sur un système d'interrogation/réponse similaire à celui mis en œuvre par les blocs 410, 412, 414, 416 et 424 en figure 4, ou par les blocs 802, 804, 806, 808, 810 et 812 en figure 8.

Alors que dans l'exemple de la figure 2 le client de licence fait partie de chaque bloc IP, dans des variantes de réalisation le client de licence associé à chaque bloc IP peut faire partie d'un système de licence centralisé, comme on va le décrire maintenant en référence à la figure 9.

La figure 9 illustre un système de licence centralisé 900 comprenant le serveur licences 114, et les clients de licence (LICENSE CLIENT #1 à #N) 208 associés à chaque noyau IP 210. Des bus d'activation 902 sont prévus entre chaque client de licence et chaque noyau IP pour transmettre le code d'activation. Ainsi, les fonctions de vérification de licence sont fournies par un sous-domaine indépendant du circuit, et ce circuit 900 a par exemple un bus interne spécifique, une horloge qui peut être séparée des blocs IP, et/ou une mémoire dédiée pour mémoriser les licences.

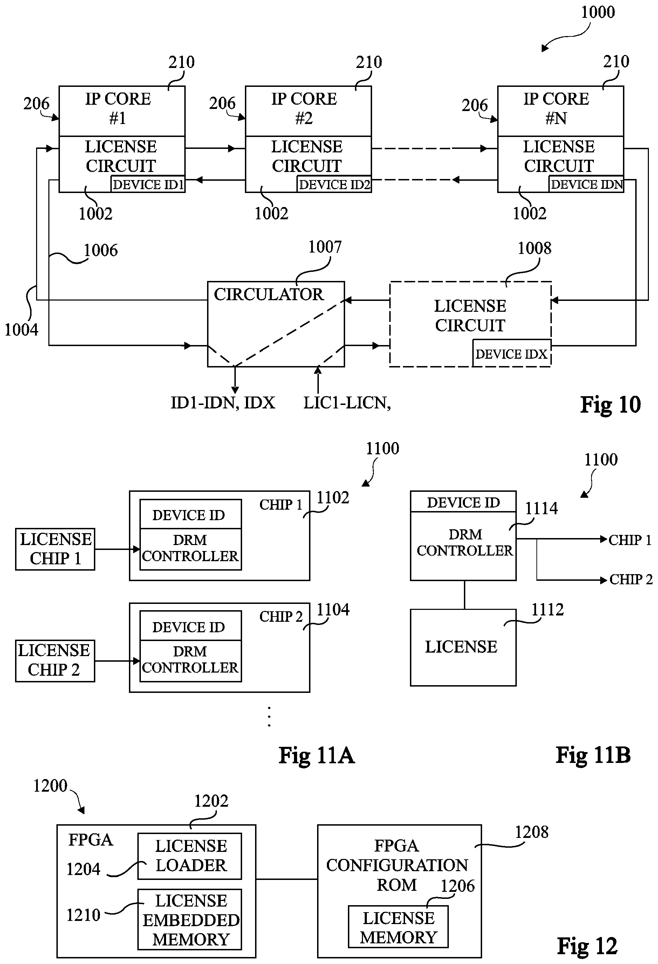

Plutôt que l'approche serveur/client de licence décrite jusqu'ici, de nombreuses variantes d'approche pourraient être utilisées, y compris une approche NoC (réseau sur puce). Une approche distribuée utilisant un bus série pourrait aussi être appliquée, comme on va le décrire maintenant en référence à la figure 10.

La figure 10 illustre un système de licence 1000 dans lequel chaque bloc IP 206 comprend le noyau IP correspondant 1 à N, et un circuit de licence (LICENSE CIRCUIT) 1002. Les circuits de licence 1002 sont par exemple couplés à un bus série 1004 pour fournir des données, et à un bus série 1006 pour introduire des données. Un circulateur (CIRCULATOR) 1007 introduit par exemple des données dans le bus 1004 à partir d'un accès d'entrée du circuit intégré et fournit des données à partir du bus 1006 à un accès de sortie du circuit intégré.

Chaque circuit de licence 1002 par exemple génère et mémorise son propre identificateur de dispositif (dispositif ID1 à dispositif IDN), qui fait partie de l'identificateur de dispositif global. En outre, dans certains modes de réalisation, un autre circuit de licence (LICENSE CIRCUIT) 1008 non directement associé à un bloc IP génère un autre identificateur de dispositif DEVICE IDX. L'identificateur de dispositif global du circuit intégré est par exemple égal à ID1+ID2+...+IDN+IDX. L'identificateur IDX est par exemple fourni dans le cas où la longueur des identificateurs combinés ID1 à IDN n'est pas suffisamment longue pour fournir un identificateur unique fiable.

Des licences LIC1 à LICN sont par exemple introduites par le circulateur 1007 dans le bus 1006. Chaque licence permet à l'un des blocs IP 206 d'être activé. En particulier, seule la licence chiffrée par une clé déduite de l'identificateur de dispositif de l'un des blocs IP 206 peut être déchiffrée par ce bloc IP et utilisée pour activer le bloc IP.

Les systèmes de licence des figures 2, 9 et 10 présentent par exemple les systèmes mis en œuvre sur une puce donnée. Dans certains cas, une carte de circuit peut comprendre plusieurs puces, chacune comportant un ou plusieurs blocs IP protégés.

La figure 11A illustre un exemple d'une vue au niveau carte 1100 du système de licence. Comme cela est illustré, des circuits intégrés (CHIP 1, CHIP 2) 1102, 1104 comprennent chacun par exemple un système de licence comprenant un circuit pour générer et/ou mémoriser un identificateur de dispositif (DEVICE ID) et un contrôleur DRM (DRM CONTROLLER) pour activer sélectivement un ou plusieurs circuits protégés sur la base d'une vérification de licence. Une mémoire (LICENCE CHIP1) est par exemple couplée au circuit 1102 et mémorise une licence associée au circuit intégré 1102, et une autre mémoire (LICENSE CHIP2) est par exemple couplée au circuit intégré 1104 et mémorise une licence associée au circuit 1104. Dans certains modes de réalisation, les mémoires pourraient faire partie d'un même dispositif mémoire.

La figure 11B illustre une vue au niveau carte 1110 selon un exemple de variante par rapport à celui de la figure 11A, dans lequel une unique mémoire 1112 mémorise une ou plusieurs licences (LICENSE) pour la totalité des puces CHIP1, CHIP2, etc. Un contrôleur DRM (DRM CONTROLER) 1114 communique par exemple la licence à chaque puce. Dans certains modes de réalisation, il y a un identificateur de dispositif différent associé à chacune des puces, et l'identificateur de dispositif (DEVICE ID) peut comprendre la combinaison de l'identificateur de dispositif de chaque puce, comme PUF(chip1) + PUF(chip2)+ ... etc. En variante, on pourrait utiliser un seul identificateur de dispositif pour toutes les puces, les puces CHIP1, CHIP2, etc. partageant le même identificateur de dispositif.

La figure 12 illustre un système de licence 1200 basé sur un FPGA 1202. Le FPGA 1202 comprend par exemple un circuit chargeur de licence (LICENSE LOADER) 1204 pour charger une licence, qui est par exemple mémorisée dans une mémoire de licence (LICENSE MEMORY) 1206 d'une ROM de configuration (FPGA CONFIGURATION ROM) 1208. La ROM de configuration est utilisée pour configurer le FPGA à la mise sous tension du dispositif ou après une réinitialisation. Le FPGA comprend aussi par exemple une mémoire à licence intégrée (LICENSE EMBEDDED MEMORY) 1210, dans laquelle la licence est chargée.

Avec la description ainsi faite d'au moins un mode de réalisation illustratif, diverses altérations, modifications, et améliorations apparaitront facilement à l'homme de l'art.

En outre, il apparaitra clairement à l'homme de l'art que les divers éléments décrits en relation avec les divers modes de réalisation pourraient être combinés, dans des variantes de réalisation, selon des combinaisons quelconques.

## Revendications

1. Dispositif (102) constitué d' un circuit intégré comprenant un circuit de vérification de licence (114) pour activer sélectivement un ou plusieurs circuits protégés (206) du dispositif (102), le circuit de vérification de licence étant adapté à :
communiquer à l'extérieur du dispositif (102) un identificateur (DEVICE ID) associé au dispositif (102) ;
recevoir une première licence ;
déduire une clé de dispositif (DEVICE KEY) à partir de l'identificateur (DEVICE ID) en appliquant une fonction de déduction de clé ;
déchiffrer la première licence en utilisant la clé de dispositif et un algorithme de chiffrement/déchiffrement symétrique afin d'extraire un premier code de vérification ;
activer un premier circuit protégé en chargeant un code d'activation dans un registre d'activation (212) associé au premier circuit protégé sur la base d'une vérification du premier code de vérification.

2. Dispositif selon la revendication 1, dans lequel l'identificateur (DEVICE ID) associé au dispositif (102) est fourni par une fonction physiquement non clonable, PUF.

3. Dispositif selon la revendication 1 ou 2, dans lequel le circuit de vérification de licence est adapté à lire l'identificateur (DEVICE ID) associé au dispositif sur une interface protégée par chiffrement.

4. Dispositif selon l'une quelconque des revendications 1 à 3, dans lequel le circuit de vérification comprend :
un serveur de licences (114) comprenant un circuit de déduction de clé (422) pour déduire la clé de dispositif et un circuit de déchiffrement (420) pour déchiffrer la première licence ;
un premier client de licence (208) associé au premier circuit protégé et comprenant un premier circuit de commande (426) pour activer le premier circuit protégé sur la base du premier code vérification ; et
un deuxième client de licence (208) associé à un deuxième circuit protégé et comprenant un deuxième circuit de commande (426) adapté à activer le deuxième circuit protégé en chargeant un deuxième code d'activation dans un registre d'activation (212) associé au deuxième circuit protégé.

5. Dispositif selon la revendication 4, dans lequel le serveur de licences (114) est adapté à transmettre le premier code de vérification au premier client de licence (208) et le deuxième code de vérification au deuxième client de licence (208).

6. Dispositif selon la revendication 4 ou 5, dans lequel le premier code de vérification est chiffré par le serveur de licences (114) sur la base d'une autre clé (IP KEY) extraite de la première licence et transmise au premier circuit de commande (426) du premier client de licence (208).

7. Dispositif selon la revendication 6, dans lequel le circuit de déchiffrement (420) est en outre adapté à extraire l'autre clé (IP KEY) de la première licence.

8. Dispositif selon l'une quelconque des revendications 1 à 7, dans lequel le premier code de vérification comprend le code d'activation chiffré en utilisant une clé de vendeur IP, le premier client de licence (208) étant en outre adapté à mémoriser la clé de vendeur IP dans une mémoire et à déchiffrer le premier code de vérification sur la base de la clé de vendeur IP pour extraire le code d'activation.

9. Dispositif selon la revendication 4, dans lequel le premier client de licence (208) comprend :
un circuit de génération d'interrogation (802) comprenant un générateur de nombres aléatoires (RNG) adapté à générer une valeur d'interrogation et à transmettre la valeur d'interrogation au serveur de licences (114) ; et
un premier circuit de génération de réponse (804, 806) adapté à générer une première valeur de réponse sur la base d'au moins la valeur d'interrogation, le serveur de licences (114) comprenant :
un deuxième circuit de génération de réponse (810, 812) adapté à recevoir la valeur d'interrogation et à générer une deuxième valeur de réponse sur la base d'au moins la valeur d'interrogation, le premier client de licence comprenant en outre un circuit de vérification adapté à comparer une première valeur de réponse à la deuxième valeur de réponse.

10. Dispositif selon la revendication 9, dans lequel les premier et deuxième circuits de génération de réponse (804, 806, 810, 812) sont adaptés à générer les première et deuxième valeurs de réponse sur la base d'une fonction de hachage.

11. Dispositif des revendications 4, 9 ou 10, dans lequel le premier client de licence (208) comprend une mémoire non volatile (404) mémorisant une copie du code d'activation, le premier circuit de commande (426) étant adapté à charger la copie du code d'activation dans le registre d'activation (212) sur la base d'une vérification d'une ou plusieurs valeurs du premier code de vérification.

12. Dispositif selon l'une quelconque des revendications 1 à 11, dans lequel le code de vérification comprend d'autres données (DRM) indiquant des limites de la licence sur la base de variables qui peuvent être mesurées par des capteurs du dispositif :
une période de validité de la licence ;
une limite géographique de la licence ;
une limitation de la licence à un ou plusieurs types de matériel ;
une limitation de température de la licence ;
une limitation de tension de la licence ;
une limitation de largeur de bande de la licence ;
une limitation de vitesse de la licence ;
une limitation d'accélération de la licence ;
une limitation d'humidité de la licence ;
une limitation de niveau lumineux de la licence ;
une limitation de champ magnétique de la licence ; et
une limitation de radioactivité de la licence.

13. Dispositif de l'une quelconque des revendications 1 à 12, dans lequel le premier code d'activation comprend une pluralité de bits, et le premier circuit protégé comprend une pluralité de portes logiques adaptées à activer sélectivement un chemin de signal du premier circuit protégé, chaque porte logique ayant une première entrée couplée à un nœud du premier circuit protégé et une deuxième entrée couplée de façon à recevoir l'un des bits mémorisés par le registre d'activation (212).

14. Dispositif selon la revendication 1, comprenant un système de vérification de licence comprenant :
un premier module IP (propriété industrielle) (206) comprenant le circuit de vérification de licence ;
un deuxième module IP (206) comprenant un deuxième circuit de vérification de licence ; et
un circulateur (1007) adapté à transmettre la première licence au premier module IP et une deuxième licence au deuxième module IP.

15. Système (100) comprenant le dispositif (102) selon la revendication 1, et un circuit de génération de licence comprenant :
un circuit de déduction de clé (122) adapté à déduire une clé de dispositif (DEVICE KEY) sur la base d'un identificateur de dispositif (DEVICE ID) du dispositif (102) en appliquant une fonction de déduction de clé ; et
un circuit de chiffrement (124) adapté à générer une première licence pour un ou plusieurs circuits protégés du dispositif (102) en chiffrant un ou plusieurs codes d'activation en utilisant la clé de dispositif.

16. Système selon la revendication 15, dans lequel le circuit de chiffrement (124) est en outre adapté à chiffrer une autre clé (IP KEY) à inclure dans la première licence.

17. Procédé de vérification de licence pour activer sélectivement un ou plusieurs circuits protégés (206) d'un dispositif (102) constitué d'un circuit intégré, le procédé comprenant :
communiquer à l'extérieur du dispositif (102) un identificateur (DEVICE ID) associé au dispositif (102) ;
recevoir une première licence ;
déduire une clé de dispositif (DEVICE KEY) de l'identificateur (DEVICE ID) en appliquant une fonction de déduction de clé ;
déchiffrer la première licence en utilisant la clé de dispositif et un algorithme de chiffrement/déchiffrement symétrique afin d'extraire un premier code de vérification ; et
activer un premier circuit protégé en chargeant le premier code d'activation dans un registre d'activation (212) associé au premier circuit protégé sur la base d'une vérification du premier code de vérification.

## Patentansprüche

1. Vorrichtung, bestehend aus einer integrierten Schaltung, die eine Lizenzverifizierungsschaltung (114) zum selektiven Aktivieren einer oder mehrerer geschützter Schaltungen (206) einer Vorrichtung (102) aufweist, wobei die Lizenzverifizierungsschaltung angepasst ist zum:
Kommunizieren einer der Vorrichtung (102) zugeordneten Kennung (DEVICE ID) nach außerhalb der Vorrichtung (102);
Empfangen einer ersten Lizenz;
Ableiten eines Vorrichtungsschlüssels (DEVICE KEY) aus der Kennung (DEVICE ID) durch Anwenden einer Schlüsselableitungsfunktion;
Entschlüsseln der ersten Lizenz unter Verwendung des Vorrichtungsschlüssels und eines symmetrischen Verschlüsselungs-/Entschlüsselungsalgorithmus', um einen ersten Verifizierungscode zu extrahieren; und
Aktivieren einer ersten geschützten Schaltung durch Laden eines Aktivierungscodes in ein Aktivierungsregister (212), das der ersten geschützten Schaltung zugeordnet ist, basierend auf einer Verifizierung des ersten Verifizierungscodes.

2. Vorrichtung nach Anspruch 1, wobei die der Vorrichtung (102) zugeordnete Kennung (DEVICE ID) durch eine physisch nicht klonbare Funktion, PUF, bereitgestellt wird.

3. Vorrichtung nach Anspruch 1 oder 2, wobei die Lizenzverifizierungsschaltung dazu ausgelegt ist, die der Vorrichtung zugeordnete Kennung (DEVICE ID) über eine durch Verschlüsselung geschützte Schnittstelle zu lesen.

4. Vorrichtung nach einem der Ansprüche 1 bis 3, wobei die Verifizierungsschaltung Folgendes aufweist:
einen Lizenzserver (114) mit einer Schlüsselableitungsschaltung (422) zum Ableiten des Vorrichtungsschlüssels und einer Entschlüsselungsschaltung (420) zum Entschlüsseln der ersten Lizenz;
einen ersten Lizenzkunden (208), der mit der ersten geschützten Schaltung verbunden ist und eine erste Steuerschaltung (426) zum Aktivieren der ersten geschützten Schaltung auf der Grundlage des ersten Verifizierungscodes aufweist; und
einen zweiten Lizenzkunden (208), der einer zweiten geschützten Schaltung zugeordnet ist und eine zweite Steuerschaltung (426) aufweist, die dazu ausgelegt ist, die zweite geschützte Schaltung durch Laden eines zweiten Aktivierungscodes in ein der zweiten geschützten Schaltung zugeordnetes Aktivierungsregister (212) zu aktivieren.

5. Vorrichtung nach Anspruch 4, wobei der Lizenzserver (114) angepasst ist, um den ersten Verifizierungscode an den ersten Lizenzkunden (208) und den zweiten Verifizierungscode an den zweiten Lizenzkunden (208) zu übertragen.

6. Vorrichtung nach Anspruch 4 oder 5, wobei der erste Verifizierungscode vom Lizenzserver (114) basierend auf einem weiteren Schlüssel (IP KEY) verschlüsselt wird, der aus der ersten Lizenz extrahiert und an die erste Steuerschaltung (426) des ersten Lizenzkunden (208) übertragen wird.

7. Vorrichtung nach Anspruch 6, wobei die Entschlüsselungsschaltung (420) ferner dazu ausgebildet ist, den weiteren Schlüssel (IP KEY) aus der ersten Lizenz zu extrahieren.

8. Vorrichtung nach einem der Ansprüche 1 bis 7, wobei der erste Verifizierungscode den Aktivierungscode aufweist, der unter Verwendung eines IP-Anbieter-Schlüssels verschlüsselt ist, wobei der erste Lizenzkunde (208) ferner dazu ausgelegt ist, den IP-Anbieter-Schlüssel in einem Speicher zu speichern und den ersten Verifizierungscode basierend auf dem IP-Anbieter-Schlüssel zu entschlüsseln, um den Aktivierungscode zu extrahieren.

9. Vorrichtung nach Anspruch 4, wobei der erste Lizenzkunde (208) Folgendes aufweist:
eine Abfrage-Erzeugungsschaltung (802), die einen Zufallszahlengenerator (RNG) aufweist, der angepasst ist, um einen Abfragewert zu erzeugen und den Abfragewert an den Lizenzserver (114) zu übertragen; und
eine erste Antwort-Erzeugungsschaltung (804, 806), die angepasst ist, um einen ersten Antwortwert basierend auf mindestens dem Abfragewert zu erzeugen, wobei der Lizenzserver (114) Folgendes aufweist:
eine zweite Antwort-Erzeugungsschaltung (810, 812), die angepasst ist, den Abfragewert zu empfangen und einen zweiten Antwortwert basierend auf mindestens dem Abfragewert zu erzeugen, wobei der erste Lizenzkunde ferner eine Verifizierungsschaltung aufweist, die angepasst ist, einen ersten Antwortwert mit dem zweiten Antwortwert zu vergleichen.

10. Vorrichtung nach Anspruch 9, wobei die erste und die zweite Antwort-Erzeugungsschaltung (804, 806, 810, 812) angepasst sind, um den ersten und den zweiten Antwortwert basierend auf einer Hash-Funktion zu erzeugen.

11. Vorrichtung nach Anspruch 4, 9 oder 10, wobei der erste Lizenzkunde (208) einen nichtflüchtigen Speicher (404) aufweist, der eine Kopie des Aktivierungscodes speichert, wobei die erste Steuerschaltung (426) angepasst ist, die Kopie des Aktivierungscodes in das Aktivierungsregister (212) zu laden, basierend auf einer Verifizierung von einem oder mehreren Werten des ersten Verifizierungscodes.

12. Vorrichtung nach einem der Ansprüche 1 bis 11, wobei der Verifizierungscode weitere Daten (DRM) aufweist, die Grenzen der Lizenz basierend auf Variablen angeben, die von Sensoren der Vorrichtung gemessen werden können:
eine Gültigkeitsdauer der Lizenz;
eine geographische Begrenzung der Lizenz;
eine Begrenzung der Lizenz auf einen oder mehrere Hardwaretypen;
eine Temperaturbegrenzung der Lizenz;
eine Spannungsbegrenzung der Lizenz;
eine Bandbreitenbegrenzung der Lizenz;
eine Geschwindigkeitsbegrenzung der Lizenz;
eine Beschleunigungsbegrenzung der Lizenz;
eine Feuchtigkeitsbegrenzung der Lizenz;
eine Lichtpegelbegrenzung der Lizenz;
eine Magnetfeldbegrenzung der Lizenz; und
eine Radioaktivitätsbegrenzung der Lizenz.

13. Vorrichtung nach einem der Ansprüche 1 bis 12, wobei der erste Aktivierungscode eine Vielzahl von Bits aufweist und die erste geschützte Schaltung eine Vielzahl von Logikgattern umfasst, die so angepasst sind, dass sie einen Signalpfad der ersten geschützten Schaltung selektiv aktivieren, wobei jedes Logikgatter einen ersten Eingang aufweist, der mit einem Knoten der ersten geschützten Schaltung gekoppelt ist, und einen zweiten Eingang aufweist, der so gekoppelt ist, dass er eines der Bits empfängt, die von dem Aktivierungsregister (212) gespeichert werden.

14. Vorrichtung nach Anspruch 1, mit einem Lizenzverifizierungssystem, das Folgendes aufweist:
ein erstes IP-Modul (206), das die Lizenzverifizierungsschaltung umfasst;
ein zweites IP-Modul (206), das eine zweite Lizenzverifizierungsschaltung aufweist; und
einen Zirkulator (1007), der geeignet ist, die erste Lizenz an das erste IP-Modul und eine zweite Lizenz an das zweite IP-Modul zu übertragen.

15. System (100), das die Vorrichtung (102) nach Anspruch 1 aufweist, und eine Lizenzerzeugungsschaltung, die Folgendes aufweist:
eine Schlüsselableitungsschaltung (122), die angepasst ist, um einen Vorrichtungsschlüssel (DEVICE KEY) basierend auf einer Vorrichtungskennung (DEVICE ID) der Vorrichtung (102) durch Anwenden einer Schlüsselableitungsfunktion abzuleiten; und
eine Verschlüsselungsschaltung (124), die angepasst ist, um eine erste Lizenz für eine oder mehrere geschützte Schaltungen der Vorrichtung (102) durch Verschlüsseln eines oder mehrerer Aktivierungscodes unter Verwendung des Vorrichtungsschlüssels zu erzeugen.

16. System nach Anspruch 15, wobei die Verschlüsselungsschaltung (124) ferner dazu ausgelegt ist, einen weiteren Schlüssel (IP KEY) zu verschlüsseln, der in der ersten Lizenz enthalten sein soll.

17. Verfahren zur Lizenzverifizierung zum selektiven Aktivieren einer oder mehrerer geschützter Schaltungen (206) einer Vorrichtung (102), die aus einer integrierten Schaltung besteht, wobei das Verfahren Folgendes aufweist:
Kommunizieren einer der Vorrichtung (102) zugeordneten Kennung (DEVICE ID) nach außerhalb der Vorrichtung (102);
Empfangen einer ersten Lizenz;
Ableiten eines Vorrichtungsschlüssels (DEVICE KEY) aus der Kennung (DEVICE ID) durch Anwenden einer Schlüsselableitungsfunktion;
Entschlüsseln der ersten Lizenz unter Verwendung des Vorrichtungsschlüssels und eines symmetrischen Verschlüsselungs-/Entschlüsselungsalgorithmus, um einen ersten Verifizierungscode zu extrahieren; und
Aktivieren einer ersten geschützten Schaltung durch Laden des ersten Aktivierungscodes in ein Aktivierungsregister (212), das der ersten geschützten Schaltung zugeordnet ist, basierend auf einer Verifizierung des ersten Verifizierungscodes.

## Claims

1. A device consisting of an integrated circuit comprising a license verification circuit (114) for selectively activating one or more protected circuits (206) of a device (102), the license verification circuit being adapted to:
communicate outside of the device (102) an identifier (DEVICE ID) associated with the device (102);
receive a first license;
derive a device key (DEVICE KEY) from the identifier (DEVICE ID) by applying a key derivation function;
decrypt the first license using the device key and a symmetrical encryption/decryption algorithm in order to extract a first verification code; and
activate a first protected circuit by loading an activation code into an activation register (212) associated with the first protected circuit based on a verification of the first verification code.

2. The device of claim 1, wherein the identifier (DEVICE ID) associated with the device (102) is provided by a PUF (physically unclonable function).

3. The device of claim 1 or 2, wherein the license verification circuit is adapted to read the identifier (DEVICE ID) associated with the device over an interface protected by encryption.

4. The device of any of claims 1 to 3, wherein the verification circuit comprises:
a license server (114) comprising a key derivation circuit (422) for deriving the device key and a decryption circuit (420) for decrypting the first license;
a first license client (208) associated with the first protected circuit and comprising a first control circuit (426) for activating the first protected circuit based on the first verification code; and
a second license client (208) associated with a second protected circuit and comprising a second control circuit (426) adapted to activate the second protected circuit by loading a second activation code into an activation register (212) associated with the second protected circuit.

5. The device of claim 4, wherein the license server (114) is adapted to transmit the first verification code to the first license client (208) and the second verification code to the second license client (208).

6. The device of claim 4 or 5, wherein the first verification code is encrypted by the license server (114) based on a further key (IP KEY) extracted from the first license and transmitted to the first control circuit (426) of the first license client (208).

7. The device of claim 6, wherein the decryption circuit (420) is further adapted to extract the further key (IP KEY) from the first license.

8. The device of any of claims 1 to 7, wherein the first verification code comprises the activation code encrypted using an IP vendor key, the first license client (208) being further adapted to store the IP vendor key in a memory and to decrypt the first verification code based on the IP vendor key to extract the activation code.

9. The device of claim 4, wherein the first license client (208) comprises:
a challenge generation circuit (802) comprising a random number generator (RNG) adapted to generate a challenge value and to transmit the challenge value to the license server (114); and
a first response generation circuit (804, 806) adapted to generate a first response value based on at least the challenge value, wherein the license server (114) comprises:
a second response generation circuit (810, 812) adapted to receive the challenge value and to generate a second response value based on at least the challenge value, wherein the first license client further comprises a verification circuit adapted to compare a first response value with the second response value.

10. The device of claim 9, wherein the first and second response generation circuits (804, 806, 810, 812) are adapted to generate the first and second response values based on a hash function.

11. The device of claim 4, 9 or 10, wherein the first license client (208) comprises a non-volatile memory (404) storing a copy of the activation code, the first control circuit (426) being adapted to load the copy of the activation code to the activation register (212) based on a verification of one or more values of the first verification code.

12. The device of any of claims 1 to 11, wherein the verification code comprises further data (DRM) indicating limits of the license based on variables that can be measured by sensors of the device:
a period of validity of the license;
a geographic limit of the license;
a limitation of the license to one or more hardware types;
a temperature limitation of the license;
a voltage limitation of the license;
a bandwidth limitation of the license;
a speed limitation of the license;
an acceleration limitation of the license;
a humidity limitation of the license;
a light-level limitation of the license;
a magnetic field limitation of the license; and
a radioactivity limitation of the license.

13. The device of any of claims 1 to 12, wherein the first activation code comprises a plurality of bits, and the first protected circuit comprises a plurality of logic gates adapted to selectively activate a signal path of the first protected circuit, each logic gate having a first input coupled to a node of the first protected circuit and a second input coupled to receive one of the bits stored by the activation register (212).

14. The device according to claim 1, comprising a license verification system comprising:
a first IP module (206) comprising the license verification circuit;
a second IP module (206) comprising a second license verification circuit; and
a circulator (1007) adapted to transmit the first license to the first IP module and a second license to the second IP module.

15. A system (100) comprising the device (102) according to claim 1, and a license generation circuit comprising:
a key derivation circuit (122) adapted to derive a device key (DEVICE KEY) based on a device identifier (DEVICE ID) of the device (102) by applying a key derivation function; and
an encryption circuit (124) adapted to generate a first license for one or more protected circuits of said device (102) by encrypting one or more activation codes using said device key.

16. The system of claim 15, wherein the encryption circuit (124) is further adapted to encrypt a further key (IP KEY) to be included in said first license.

17. A method of license verification for selectively activating one or more protected circuits (206) of a device (102) consisting of an integrated circuit, the method comprising:
communicating outside of the device (102) an identifier (DEVICE ID) associated with the device (102);
receiving a first license;
deriving a device key (DEVICE KEY) from the identifier (DEVICE ID) by applying a key derivation function;
decrypting the first license using the device key and a symmetrical encryption/decryption algorithm in order to extract a first verification code; and
activating a first protected circuit by loading the first activation code into an activation register (212) associated with the first protected circuit based on a verification of the first verification code.
